# EUROPEAN PATENT APPLICATION

(11) **EP 0 849 913 A2**
(43) Date of publication of application: **24.06.1998**
(21) Application number: 97310062.1
(22) Date of filing: 12.12.1997
(51) Int. Cl.: H04L 12/28

(54) **Data communication systems, data communication devices and methods**

(30) Priority: 18.12.1996 JP 338032/96
(71) Applicant: SONY CORPORATION, Tokyo 141 (JP)
(72) Inventor: Osakabe, Yoshio, c/o Intell. Property Department, Shinagawa-ku, Tokyo 141 (JP)
(74) Representative: Pilch, Adam John Michael

(57) **Abstract**

An IEEE-1394 serial bus (28) to which are connected a digital television (21), a digital video cassette recorder (22) and a personal computer (23), and a home bus (29) to which are connected an air conditioner (25), lighting (26) and an opening and closing device (27), are linked using a home bus/1394 converter (24) for transmitting control commands therebetween. Then, for example, a command transmitted using an IEEE-1394 serial bus format from the digital television (21) to the lighting (26) is supplied to the lighting via the home bus (29) after conversion to the packet format for the home bus (29) at the home bus/1394 converter (24).

## Description

The present invention relates to data communication systems, data communication devices and methods, such as those capable of transmitting digital data such as images, audio and control commands between first and second buses.

In recent years, a home bus for controlling household electrical appliances such as lighting, air conditioners and the opening and closing of curtains, etc., has been developed. For example, a "Home Bus System" (HBS) established as ET-2101 by the "EIAJ" (Electronic Industries Association of Japan) is a bus system for connecting and mutually controlling household electrical appliances using a co-axial cable or twisted pair cable (telephone line).

A CEBus established as IS-60 by the "EIA" (Electronic Industries Association) and a "European Home System" (EHS) discussed by the "CEN" (European Committee for Electrotechnical Standardization) of Europe are buses for use with a plurality a media such as lighting wires, infrared rays, radio waves or optical fibers etc. in addition to co-axial cables and twisted pair cables. These home buses transmit control data at low data transmission speeds of approximately 9600 bits/second or less with the object of mutually controlling the household electrical appliances.

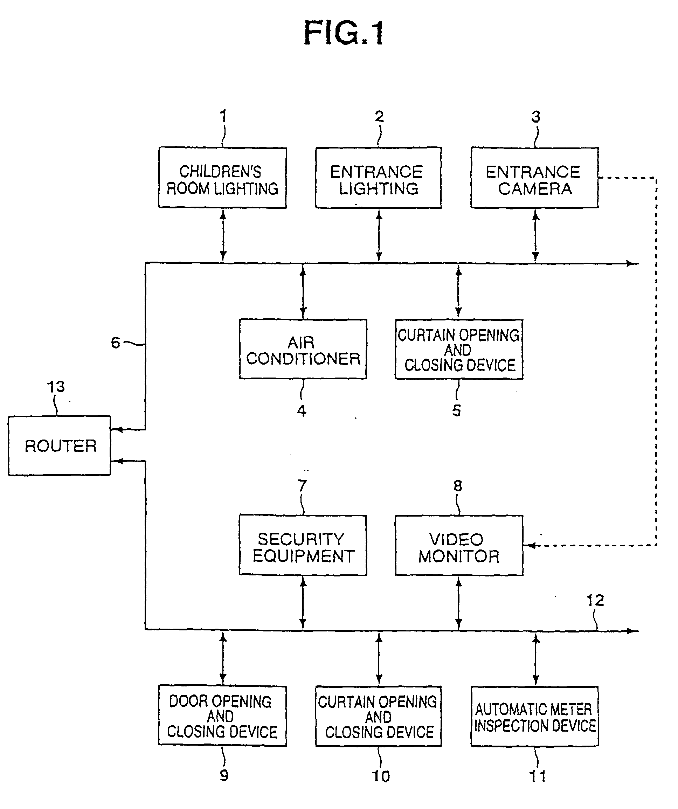

FIGURE 1 is a view showing an example configuration of a data transmission system employing a home bus. Here, children's room lighting 1, entrance lighting 2, an entrance camera 3, an air conditioner 4 and a curtain opening and closing device 5 are connected to a home bus (hereinafter referred to as a lighting cable bus) 6 employing the lighting cabling of the house. Security equipment 7, a video monitor 8, a door opening and closing device 9, a curtain opening and closing device 10 and an automatic meter inspection device 11 are connected to a home bus (hereinafter referred to as "TP bus") 12 employing twisted pair cables.

A router 13 carries out interface processing between the lighting cable bus 6 and the TP bus 12 and transmits control commands and picture audio signals supplied via the lighting cable bus 6 to the TP bus 12 as is. Control commands and picture audio signals supplied by the TP bus 12 are directly transmitted to the lighting cable bus 6.

The specifications for portions corresponding to the physical layer such as electrical characteristics, wave forms, logical conditions etc. are completely different for an HBS, EHS and CEBus home bus even in using twisted pair cable, lighting cable, or co-axial cable within the household.

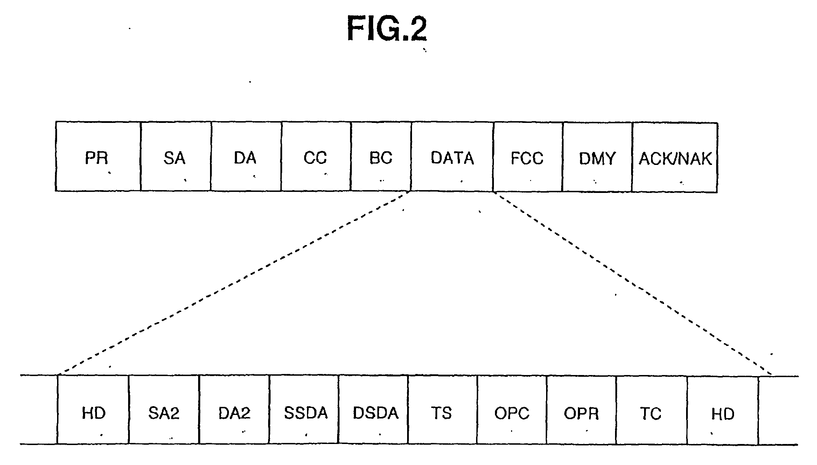

FIGURE 2 shows a HBS packet frame format. The following data is listed at each of the fields.

Namely, PR (Priority code) indicating the packet priority, SA (Source address) indicating the address of the original transmission, DA (Destination address) indicating the address of the destination, CC (Control code) indicating the type of control, BC (Message length) indicating the length of the message, data DATA (including, for example, data to be transmitted, opecode, operand, and others (to be described later)), code FCC (Frame Check Code) for detecting errors in data within the frame, dummy data DMY (Dummy) and ACK/NAK code (ACK/NAK).

The following data is listed at the aforementioned DATA field.

Namely, HD (Header code) listing data for carrying out communications between other buses, SA2 (Source sub-address) indicating the sub-address of the transmission source address, DA2 (Destination sub-address) indicating the sub-address of the destination address, SSDA (Source sub-device address) indicating the address of the sub-device of the transmission source, DSDA (Destination sub-device address) indicating address for the sub-device of the transmission destination, TS (Table selector), operation code OPC (Opecode), OPR (Operand) and TC (Termination code).

Header code (HD) is used when carrying out communications by connecting the HBS to a bus other than the HBS bus.

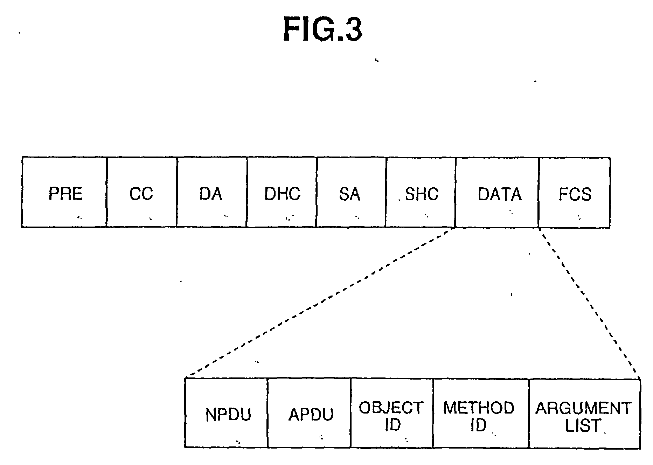

FIGURE 3 is a view showing a frame format of a CEBus packet. The following data is listed as each field.

Namely, PRE (Preamble), CC (Control Code), DA (Destination address), DHC (Destination House Code), SA (Source address), SHC (Source House code), data DATA, FCS (Frame Check Sequence) frame check sequence for detecting frame transmission errors.

Further, the following data is listed at the DATA field.

Namely, NPDU (Network Protocol Data Unit), APDU (Application Protocol Data Unit), OBJECT ID and METHOD ID indicating commands for the equipment, and ARGUMENT LIST.

A Network Protocol Data Unit (NPDU) is used when the network layer is established for communication between the media with different CEBus or between the CEBus and other buses.

As shown in FIG. 2 and FIG. 3, in the HBS and CEBus, a data link layer for establishing a packet format, a network layer for establishing communication between media within the home bus, and communication with another home bus, and a application layer for establishing communication commands and command processing for carrying out communication between equipment are different. Equipment with a HBS interface built-in therefore cannot communicate directly with equipment connected to the CEBus.

On the other hand, in recent years, an IEEE-1394 High Performance Serial Bus (hereinafter referred to as IEEE-1394 serial bus) established by the IEEE (The Institute of Electrical and Electronics Engineers, Inc.) has become used for communications between AV (Audio Visual) equipment and PC (personal computer) and PC associated equipment. The IEEE-1394 serial bus is capable of transmitting digital images and audio signals at high speeds in real time and is capable of transmitting control commands.

However, with a related home bus, the data transmission rate is 9600 bits/second or less and is exclusively used to mutually control the apparatus. Therefore, when, for example, an image taken by the entrance camera 3 is displayed on the video monitor 8, the data transmission rate of the home bus is insufficient and a troublesome connection with a cable that is different to that for the home bus has to be made.

Since a plurality of types of home bus exist, it is also difficult to decide to connect the apparatus to which home bus. Further, since it is not possible to connect apparatus with a built-in interface for one home bus directly to another home bus, it is necessary for the apparatus to communicate with other apparatus via a router and the system therefore becomes complicated.

Further, it is necessary for apparatus connected to different media within the same home bus to communicate via a network layer. Moreover, since there are a number of different systems in regions such as Japan, Europe and North America, there is no compatibility between the physical layers, data link layers, network layers and application layers etc., even if the same media is used. In addition, commands for procedure and control of communication are different depending on systems, mutual communication is therefore not possible.

On the other hand, an IEEE-1394 serial bus under current conditions has a cable length of 4.5 meters at present and is short for connecting household electrical appliances. Development of a 1394 long cable is also being carried out with the intention of providing the IEEE-1394 serial bus for longer distances use but even with this it will be necessary to lay new exclusive cables within households. Further, in the case of controlling household electrical appliances, comparatively low speeds are sufficient for transmission of control commands. The mechanism for carrying out data transmission in the isochronous mode of the IEEE-1394 serial bus therefore has redundancy and the price becomes expensive.

Moreover, data for household electrical appliances includes data of a high degree of urgency where the communication priority is high such as security signals or fire alarms. Therefore, when AV equipment and household electrical appliances are directly connected using a bus, the transmission of data of a high degree of urgency is prevented in some cases.

According to a first aspect of the present invention, a data communication system comprises a first bus for transmitting digital data and commands bidirectionally, a second bus for transmitting commands for controlling electronic apparatus principally for household use, and a connection device for connecting the first and second buses, wherein the connection device converts a packet format of an asynchronous transmission mode of the first bus to a packet format of the second bus, and converts the second bus packet format to the asynchronous transmission mode packet format of the first bus.

Here, the connection device is for connecting the first bus for bidirectionally transmitting digital data and commands, and the second bus for transmitting commands for controlling electronic apparatus principally for household use. This connection device then converts an asynchronous transmission mode packet format of the first bus to a packet format of the second bus, and converts the second bus packet format to the asynchronous transmission mode packet format of the first bus.

Further, according to a second aspect of the present invention, a data communication device comprises the first bus for carrying out bidirectional transmission of digital data and commands, the second bus for transmitting commands for controlling electronic apparatus that are principally for household use, the first conversion device for converting a packet format of an asynchronous transmission mode of the first bus to a packet format of the second bus, and the second conversion device for converting the packet format of the second bus to the packet format of the asynchronous transmission mode of the first bus.

In this case, the first conversion device converts the packet format of the asynchronous transmission mode of the first bus for carrying out bidirectional transmission of digital data and commands to the packet format of the second bus for transmitting commands for controlling electronic apparatus that are principally for household use. The second conversion device converts the packet format of the second bus to the packet format of the asynchronous transmission mode of the first bus.

According to a third aspect of the present invention, a data communication method comprises converting a packet format of an asynchronous transmission mode of the first bus for carrying out bidirectional transmission of digital data and commands to a packet format of the second bus for transmitting commands for controlling electronic apparatus that are principally for household use, and converting the packet format of the second bus to the packet format of the asynchronous transmission mode of the first bus.

Here, the packet format of an asynchronous transmission mode of the first bus for carrying out bidirectional transmission of digital data and commands is converted to the packet format of the second bus for transmitting commands for controlling electronic apparatus that are principally for household use. Further, the packet format of the second bus is converted to the packet format of the asynchronous transmission mode of the first bus.

In a preferred embodiment of the present invention, a serial bus and a home bus for carrying out a bidirectional transmission of digital data are connected, an asynchronous transmission mode format of a serial bus and a format of a home bus are converted therebetween, and control commands and data can then be mutually transmitted.

The invention will now be described by way of example with reference to the accompanying drawings, throughout which like parts are referred to by like references, and in which:
FIG. 1 is a view showing an example configuration of a related data transmission system employing a home bus;
FIG. 2 is a view showing an HBS frame format;
FIG. 3 is a view showing a CEBus frame format;
FIG. 4 is a view showing an example configuration of an embodiment of an AV system to which the present invention may be applied;
FIG. 5 is a view showing a layer structure of an IEEE-1394 serial bus;
FIG. 6 is a view showing the conditions for carrying out data conversion at each layer of the OSI model of the ISO and the IEEE-1394 serial bus;
FIG. 7 is a view showing a Write request for data block packet of the asynchronous data transmission mode of the IEEE-1394 serial bus;
FIG. 8 is a view showing a Write request for data quadlet packet of the asynchronous data transmission mode of the IEEE-1394 serial bus;
FIG. 9 is a view showing an example configuration of an FCP (Function Control Protocol) frame of the asynchronous data transmission mode of the IEEE-1394 serial bus;
FIG. 10 is a view showing an example configuration of an FCP frame of an AV/C in the case of transmitting HBS data;
FIG. 11 is a view showing an example of configuration of an FCP frame of an AV/C in the case of transmitting CEBus data;
FIG. 12 is a view showing an example of the case of using CTS = 0001b reserved for CEBus use;
FIG. 13 is a view showing an example of transmitting IEEE-1394 serial bus asynchronous mode data using HBS packets;
FIG. 14 is a view showing an example of transmitting IEEE-1394 serial bus asynchronous mode data using CEBus packets; and
FIG. 15 is a view showing an example configuration of a second embodiment of an AV system to which the present invention may be applied.

### First Embodiment

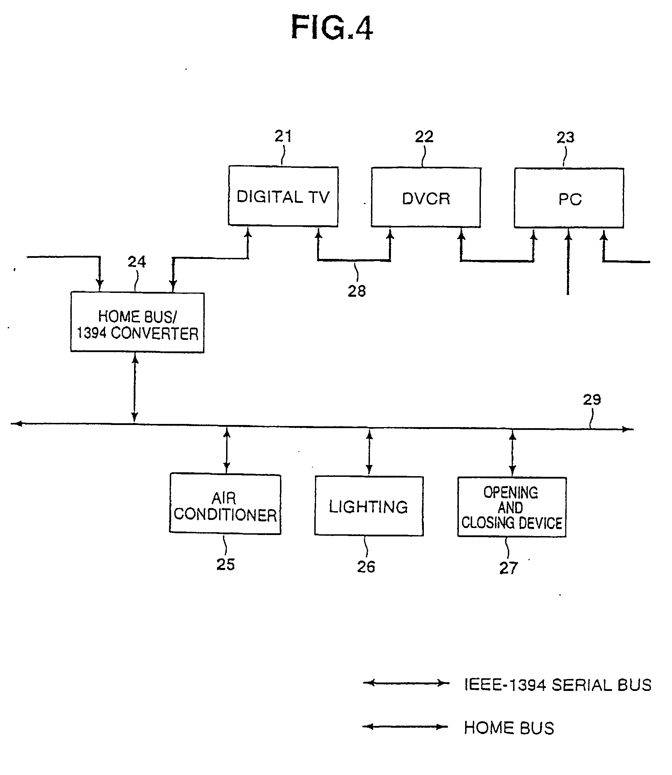

In FIGURE 4, a digital TV 21, DVCR (digital video cassette recorder) 22 and a PC (personal computer) 23 are connected to an IEEE-1394 serial bus 28. An air conditioner 25, lighting 26 and opening and closing device 27 are connected to a home bus 29. The IEEE-1394 serial bus 28 is connected to a home bus 29 via a home bus/1394 converter 24 (connection means, first conversion means, second conversion means).

For example, when the digital TV 21 displays a prescribed image, an image displayed on the screen of the digital TV 21 is made easy to see by putting lighting 26 for a room in which this digital TV 21 is provided off.

The digital TV 21 generates a control signal giving a switch off instruction to the lighting 26 for transmission to the lighting 26 via the IEEE-1394 serial bus 28. This control signal is converted to a data format for the home bus 29 at the home bus/1394 converter 24 and supplied to the lighting 26. The lighting 26 then puts the power supply switch off in accordance with the control signal from the digital TV 21 supplied via the home bus/1394 converter 24 and the room lighting is turned off.

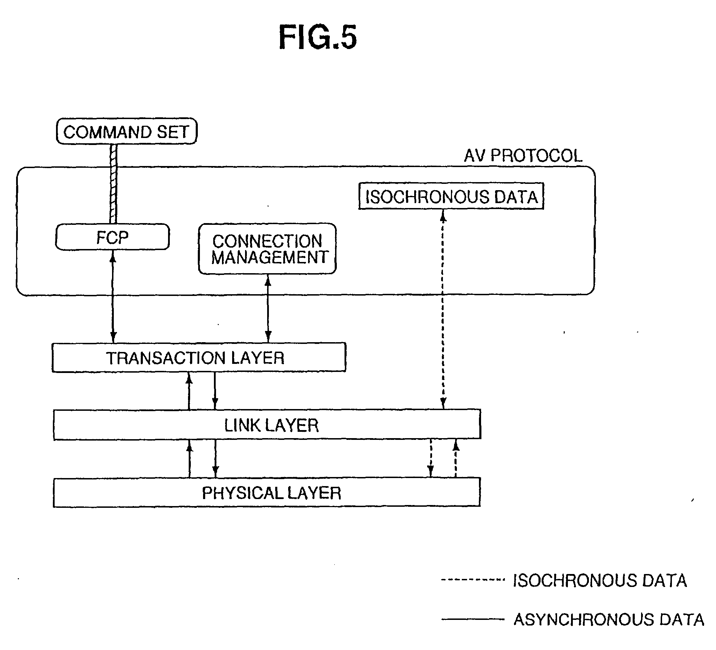

FIGURE 5 is a view showing a layer structure for carrying out communication in an isochronous mode and an asynchronous mode for an IEEE-1394 serial bus. A command set (asynchronous data) for a prescribed apparatus is converted to an FCP (Function Control Protocol) frame of the IEEE-1394 serial bus at the application layer for being supplied to the transaction layer. The transaction layer executes read/write instructions and read-write transactions etc., with commands supplied to the transaction layer being supplied to the link layer. The link layer then carries out error recovery control etc., with the resulting command set being transmitted to the IEEE-1394 serial bus 28 via the physical layer. Further, the connection information is then supplied to the transaction layer under the control of the connection management.

Data transmitted by the IEEE-1394 serial bus 28 is supplied to the link layer via the physical layer. Data supplied to the link layer undergoes error recovery processing and is supplied to the transaction layer. At the transaction layer, connection control etc., is carried out under the control of the connection management and the FCP frame is supplied to the application layer of a prescribed apparatus.

On the other hand, the isochronous data is transmitted to the IEEE-1394 serial bus 28 via the physical layer after being supplied to the link layer from the application layer and having undergone error recovery processing etc. Further, isochronous data transmitted via the IEEE-1394 serial bus 28 is supplied from the physical layer to the link layer. Then, after error recovery processing etc. is carried out, this isochronous data is supplied to the application layer.

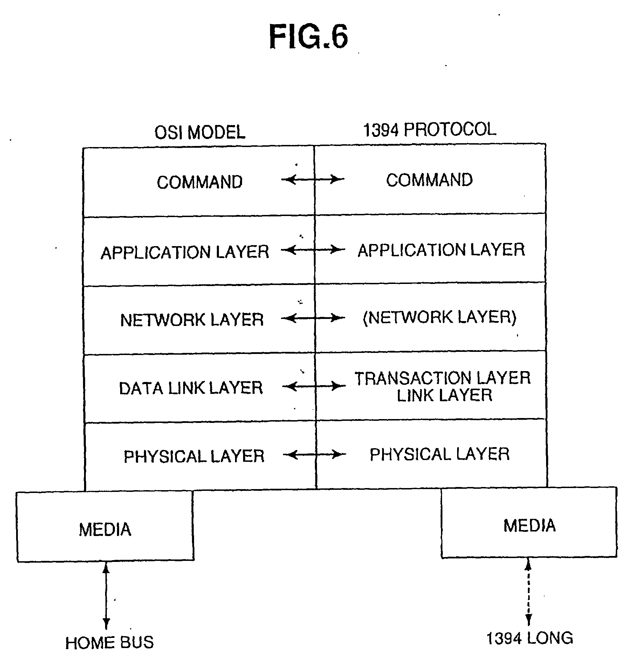

FIGURE 6 is a view for comparing the layer structures used in the OSI model established by the ISO (International Organization for Standardization) and in the IEEE-1394 serial bus. The physical layer occurring at the OSI model corresponds to the physical layer of the IEEE-1394 serial bus and the data link layer occurring in the OSI model corresponds to the transaction layer and link layer of the IEEE-1394 serial bus. Further, the network layer of the OSI mode corresponds to the network layer of the IEEE-1394 serial bus, the application layer of the OSI model corresponds to the application layer of the IEEE-1394 serial bus, and the commands of the OSI model correspond to the commands of the IEEE-1394 serial bus.

In the above embodiment, data formats are converted between each of the layers for the home bus having the OSI model layer structure and the IEEE-1394 serial bus.

For the data transmission with the IEEE-1394 serial bus, there exist an asynchronous data transmission mode (asynchronous mode) and an isochronous data transmission mode (isochronous mode) operating in synchronization with an isochronous cycle (hereinafter referred to simply as cycle) of 8 kHz (125 µs) generated by an apparatus that is the cycle master for the IEEE-1394 serial bus.

The asynchronous mode is generally used for transmitting the data in modes which are not in real time and transmitting control signals for apparatus and control commands. On the other hand, the isochronous mode is used for transmitting moving picture data such as movies, music and musical instruments etc., in real time. In isochronous mode, the data is transmitted on the IEEE-1394 serial bus at a cycle of 125 µs. The transmission rate of the IEEE-1394 serial bus is 100 megabits per second (Mbps), 200 Mbps or 400 Mbps.

Next, a description is given of the data transmission method using the asynchronous mode of the IEEE-1394 serial bus. Apparatus connected to the IEEE-1394 serial bus are controlled by a function control protocol (FCP). The FCP transmits control commands and responses using asynchronous packets.

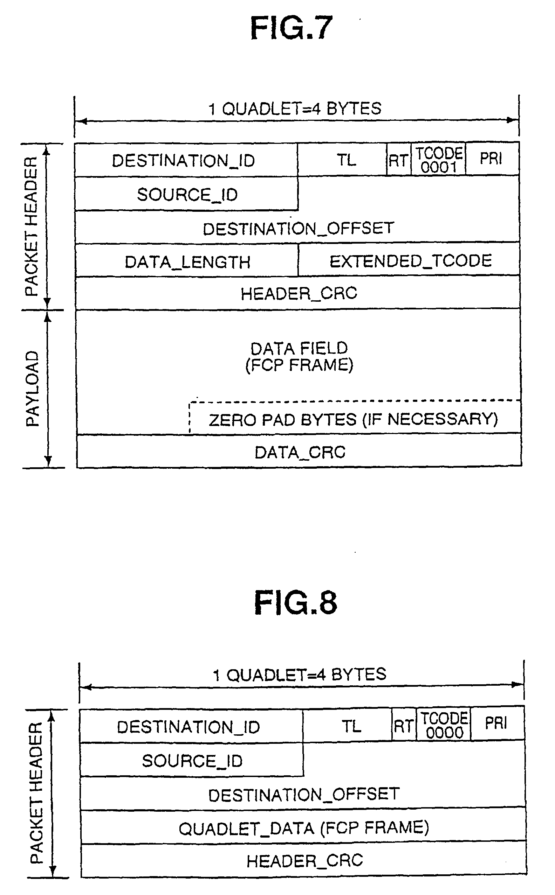

FIGURE 7 shows the structure of a "Write request for data block packet" for the asynchronous data transmission mode of the IEEE-1394 serial bus. FIGURE 8 shows the structure of a "Write request for data quadlet packet" for the asynchronous data transmission mode of the IEEE-1394 serial bus.

In a packet header shown in FIG. 7, a destination address is installed at a DESTINATION_ID. When there is a plurality of transactions, values for identifying each transaction are set at the TL (Transaction Label). When there is a failure of a transaction issuance, a retry method is designated at RT (Retry Code). The transaction type is set at the TCODE and the priority is set at PRI (Priority).

A transmission source ID is set at SOURCE_ID and a register address is set at DESTINATION_OFFSET. The data length is set at DATA_LENGTH. Extended tcode can be set at EXTENDED_TCODE in a transaction type where the TCODE is 0001b (with b indicating that 001 is a binary number). Cyclic redundancy code for carrying out error correction control of the header is set at the HEADER_CRC (Cyclic Redundancy Check).

In FIG. 8, tcode occurring at the packet header of FIG. 7 becomes 0000b and QUADLET_DATA is set at the DATA_LENGTH and EXTENDED_TCODE portions as an FCP frame. When tcode is 0000b, EXTENDED_TCODE is unnecessary. Other portions are the same as for the case in FIG. 7 and their description is therefore omitted.

A payload of these two packets is referred to as an FCP frame. When the length of an FCP frame is fixed at four bytes, "Write request for data quadlet packet" shown in FIG. 8 is used. In FIG. 7, "ZERO PAD BYTES" within the FCP frame is dummy data inserted so that the data length of the FCP frame becomes an integer multiple of four bytes. Cyclic redundancy code for carrying out error correction control of the FCP frame is set at DATA_CRC.

SOURCE_ID is the NODE_ID of the transmission side and is a 16 bit address. DESTINATION_ID is a receiving side NODE_ID and is also a 16 bit address. The lower six bits of this 16 bit address designates one of a maximum of 63 apparatus connected to the IEEE-1394 serial bus and the upper 10 bits designate one of a maximum of 1023 IEEE-1394 serial buses that can be connected to the apparatus.

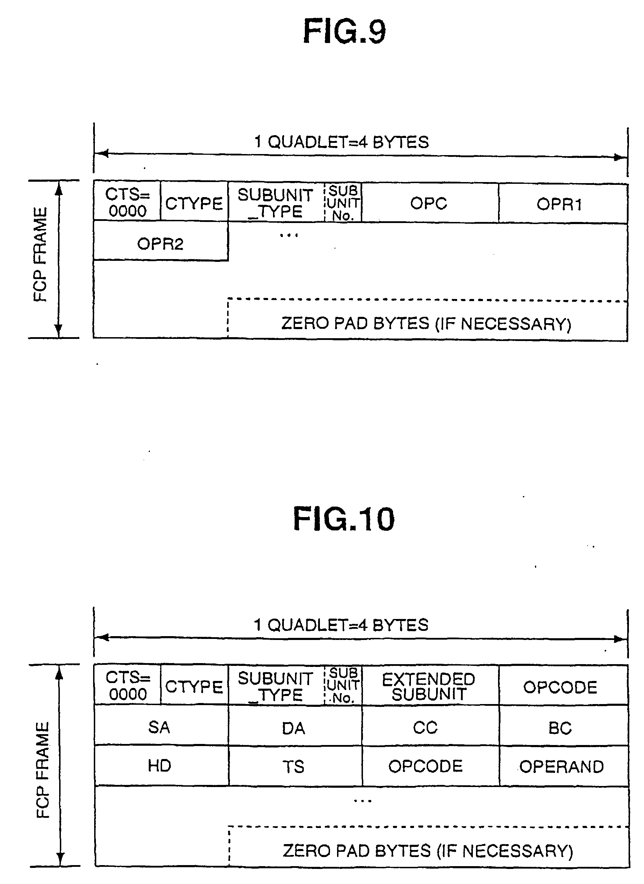

FIGURE 9 shows the configuration of an FCP frame of an asynchronous data mode of the IEEE-1394 serial bus. The first four bits of the FCP frame are a command transaction set (CTS). In the fourth edition of the working draft (hereinafter abbreviated to "4WD") for IEC1883 of the SC100 of the IEC (International Electrotechnical Commission) "Specification of Digital Interface for Consumer Electronic Audio/Video Equipment", the four bit of CTS is defined as follows.
0000b = AV/C (audio visual/control)
0001b = reserved for CAL
0010b = reserved for HBS
1110b = Vender Unique
1111b = extended CTS
where the character b indicates that the previous four figures of numerical characters are a binary value.

CTS = 0000b is allotted for AV/C apparatus use. Here, CAL is an abbreviation of "Common Application Language" that is a command technical standard for CEB. When the four bits of CTS are all 1, the following 8 bits represent an extended CTS.

FIGURE 9 shows an FCP frame for AV/C-CTS (when CTS = 0000b). Four bits of command type (hereinafter abbreviated to CTYPE) follow AV/C-CTS. The types of command and response are indicated by CTYPE. When the MSB (Most Significant Bit) of the four bits is zero, the frame is a command frame. An MSB of 1 indicates that the frame is a response frame. The following commands or responses are then allotted to the CTYPE.
0000b = CONTROL
0001b = STATUS
0010b = INQUIERY
0011b = NOTIFY
1000b = NOT IMPLEMENTED
1001b = ACCEPTED
1010b = REJECTED
1011b = IN TRANSITION
1100b = IMPLEMENTED/STABLE
1101b = CHANGED

The following kind of sub-unit is then allotted to the following five bits of SUBUNIT_TYPE.
00000b = Video monitor
00100b = VCR
00101b = TV tuner
00111b = Video camera

All of the five bits of SUBUNIT_TYPE being 1 indicates that the following 8 bits are an extended subunit. The three bits of the SUBUNIT_NUMBER are used for discriminating between a plurality of identical sub-units in a single apparatus such as two cassette decks in a double cassette deck.

The following commands are allotted to the 8 bits of the OPC.
00h to 0Fh: unit and sub-unit commands
10h to 3Fh: unit commands
40h to 7Fh: sub-unit commands
A0h to BFh: unit commands
C0h to DFh: sub-unit commands

FIGURE 10 shows an example of an FCP frame of an AV/C in transmitting HBS data. In the data communication system shown in FIG. 4, the case where the digital TV 21 turns off the illumination of the lighting 26 is assumed. In this case, the NODE_ID of the digital TV 21 is designated as the SOURCE_ID on the IEEE-1394 serial bus, the NODE_ID of the home bus/1394 converter 24 is designated as the DESTINATION_ID and the FCP frame is transmitted in asynchronous mode.

In the case of this example, the following values are set up at each of the fields of the FCP frame of the AV/C.
CTS: CTS = 0000b
CTYPE: control = 0000b
SUBUNIT_TYPE: "extended" = 11111b
SUBUNIT_NO. : "extended" = 111b
EXTENDED SUB-UNIT: "HBS" = F2h
OPC: "other bus instruction = F0h
SA: HBS gateway = 4Fh
DA: "lighting" = 7Eh

Next, control code is set at CC (control code) and an opecode and operand is set. A control instruction is also set to put the power supply of the lighting 26 on and the turning off of the power supply for the lighting 26 can be designated.

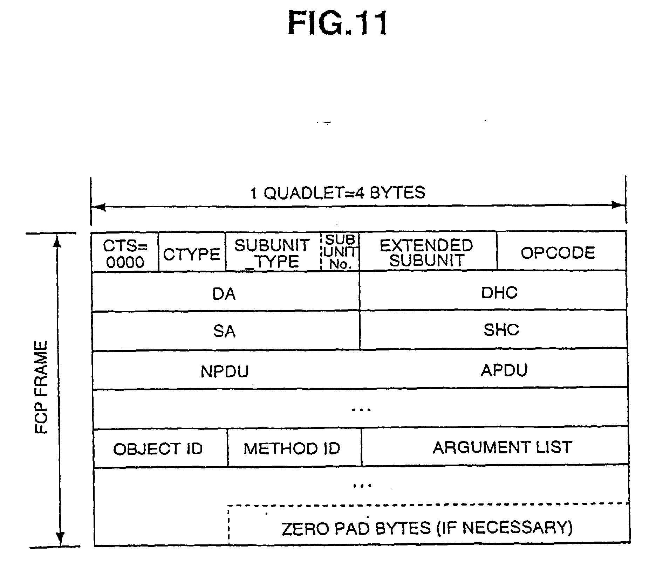

FIGURE 11 shows an example of FCP frames of AV/C in the case of transmitting CEBus data. In the data communication system shown in FIG. 4, the case where the digital TV 21 turns off the illumination of the lighting 26 is assumed.

Here, the NODE_ID of the digital TV 21 is designated as the SOURCE_ID on the IEEE-1394 serial bus, the NODE_ID of the home bus/1394 converter 24 is designated as the DESTINATION_ID and the FCP frame is transmitted in asynchronous mode. The FCP frame of the AV/C then has the following values.
CTS: CTS = 0000b
CTYPE: control = 0000b
SUBUNIT_TYPE: "extended" = 11111b
SUBUNIT_NO. : "extended" = 111b
EXTENDED SUB-UNIT: "CEBus" = F0h
OPC: "other bus instruction" = F0h
DA: "lighting" = ^{∗∗}h, ^{∗∗} h
DHC: Destination House Code = 00h, 00h
SA: CEBus gateway = **h, **h
SHC: Source House Code = 00h, 00h

Control commands for apparatus are set at the OBJECT ID and METHOD ID and required arguments are set at the ARGUMENT LIST. In this case, a control command is set to put the power supply of the lighting 26 off. This FCP frame is supplied to the home bus/1394 converter 24 via the IEEE-1394 serial bus 28 before being supplied to the lighting 26 via the home bus 29 after being converted to the format of the home bus CEBus as shown in FIG. 3. The lighting 26 therefore puts the power supply off in accordance with the control command supplied by the digital TV 21.

At the CEBus, the 16 bit address is not allotted according to the type of apparatus. The aforementioned symbol "**" indicates that respective specified values are set corresponding to each apparatus.

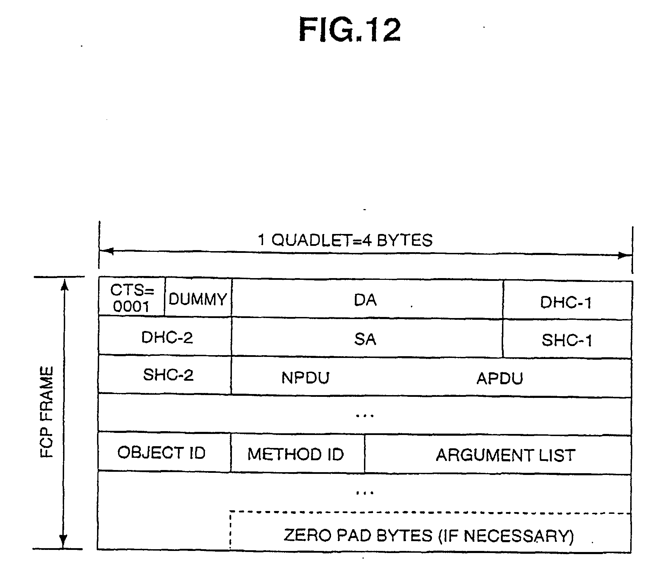

FIGURE 12 shows an example of the case of using CTS = 0001b reserved for CEBus use. The following values are then set for each field, respectively.
CTS: CEBus = 0001b
DUMMY: Dummy = 0000b
DA: "lighting" = **h, **h
DHC: Destination House Code = 00h, 00h
SA: CEBus gateway = **h, **h
SHC: Source House Code = 00h, 00h

A control command is set for apparatus at the OBJECT ID and the METHOD ID and required arguments are set at the ARGUMENT LIST. Namely, as in the case in FIG. 11, a control command is set for putting the power supply of the lighting 26 off. This FCP frame is then supplied to the home bus/1394 converter 24 via the IEEE-1394 serial bus 28 and is then supplied to the lighting 26 via the home bus 29 after being converted to the format of the home bus CEBus as shown in FIG. 3. The lighting 26 therefore puts the power supply off in accordance with a control command supplied by the digital TV 21.

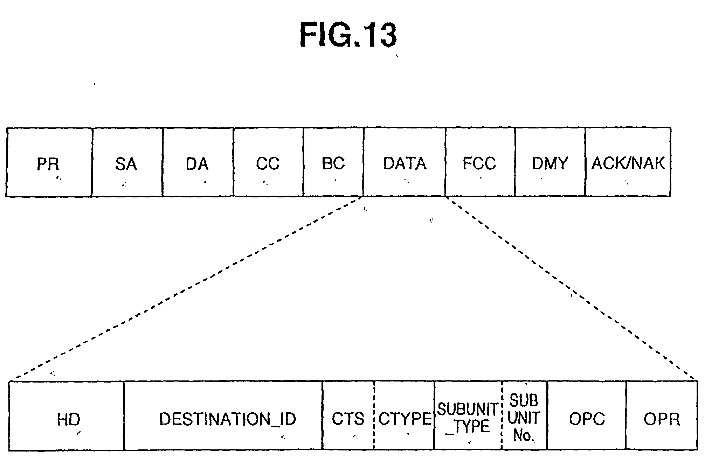

FIGURE 13 shows an example of a format for the case of transmitting data for an asynchronous mode of the IEEE-1394 serial bus using an HBS packet. Each of the fields other than the DATA field is the same as for the case shown in FIG. 2 and descriptions of the fields other than the DATA field are omitted.

As shown in FIG. 13, the DATA field comprises HD (Header code), DESTINATION_ID, CTS, CTYPE, SUBUNIT_TYPE, SUBUNIT_NUMBER, OPC and OPR. The 8 bits of HD stipulate communication with the external bus, i.e. the network layer. When bit 2 of bits 0 to 7 is 1, a Destination address of another bus can be designated. Following HD, the DESTINATION_ID occurring at the asynchronous mode packet of the IEEE-1394 serial bus is directly indicated. From the CTS onwards an AV/C-CTS format is used.

At the opecode (OPC) and operand (OPR) of this packet, can be set, for example, a control command for apparatus connected to the IEEE-1394 serial bus 28 or a response message. Control commands and response messages can then be supplied to apparatus connected to the IEEE-1394 serial bus 28 from apparatus connected to the home bus 29 (in this case, HBS).

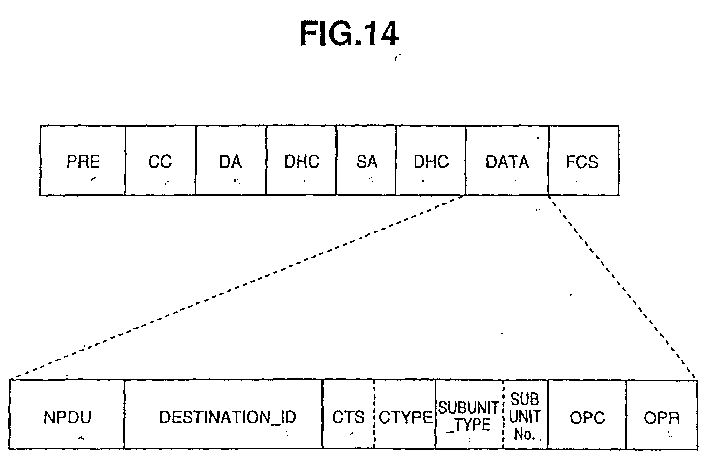

FIGURE 14 shows an example format for the case of transmitting data for the asynchronous mode of the IEEE-1394 serial bus using CEBus packets. Fields other than the DATA field are the same as the case in FIG. 3 and their description is therefore omitted.

As shown in FIG. 14, the DATA field comprises NPDU, DESTINATION_ID, CTS, CTYPE, SUBUNIT_TYPE, SUBUNIT_NUMBER, OPC and OPR. The symbol NPDU represents a header defining a network layer of unfixed length of eight bit units. After NPDU, DESTINATION_ID of an asynchronous mode packet of the IEEE-1394 serial bus is directly indicated. An AV/C-CTS format is then used from CTS onwards.

As in the case of HBS shown in FIG. 13, a control command for apparatus connected to the IEEE-1394 serial bus 28 or a response message, for example, can be set at the opecode (OPC) and operand (OPR) of this packet. Control commands and response messages can then be supplied to apparatus connected to the IEEE-1394 serial bus 28 from apparatus connected to the home bus 29 (in this case, CEBus).

### Second Embodiment

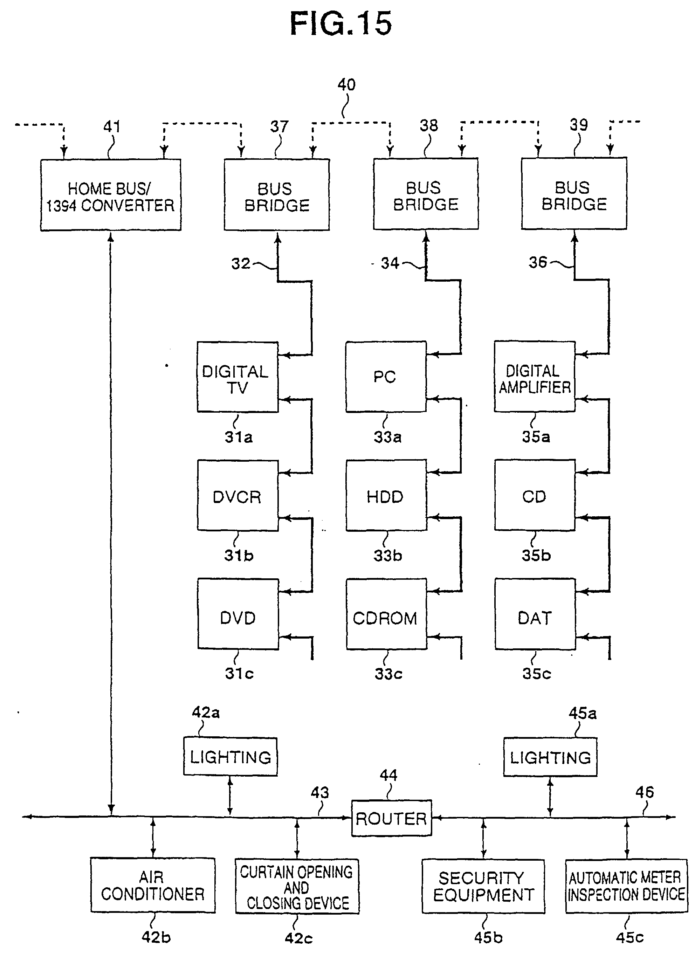

FIGURE 15 shows an example configuration of the second embodiment of an AV system to which the present invention is applied. The maximum number of devices that can be connected to the IEEE-1394 serial bus is 63. Here a digital TV 31a, a digital video cassette recorder (DVCR) 31b and a digital video disc (DVD) 31c are connected to an IEEE-1394 serial bus 32.

A personal computer 33a, HDD (hard disc drive) 33b and a CD-ROM player 33c are similarly connected to an IEEE-1394 serial bus 34. Further, a digital amplifier 35a, CD player 35b and DAT (digital audio tape recorder) 35c are connected to an IEEE-1394 serial bus 36.

The IEEE-1394 serial bus 32 is connected to a bus bridge 37 (connection means), the IEEE-1394 serial bus 34 is connected to a bus bridge 38 (connection means) and the IEEE-1394 serial bus 36 is connected to a bus bridge 39 (connection means). The bus bridges 37, 38 and 39 are connected to a long distance cable (hereinafter abbreviated to "IEEE-1394 long") 40 of the IEEE-1394 serial bus. In this way, the systems can be connected to the IEEE-1394 serial bus up to a maximum of 1023.

Meanwhile, lighting 42a, an air conditioner 42b and a curtain opening and closing device 42c are connected to a home bus 43. Further, lighting 45a, security equipment 45b and an automatic meter inspection device 45c are connected to a home bus 46. The home bus 43 and the home bus 46 are connected by a router 44 (transmission control means), with data being transmitted between apparatus connected to the home bus 43 and apparatus connected to the home bus 46 via the router 44.

With the AV system shown in FIG. 15, the digital TV 31a, for example, is taken to put the illumination of the lighting 45 off. First, the digital TV 31a designates an address of the digital TV 31a on the IEEE-1394 serial bus 32 at the SOURCE_ID of the header of the packet shown in FIG. 7, designates the address of the bus bridge 37 at the DESTINATION_ID and transmits these addresses to the IEEE-1394 serial bus 32 in asynchronous mode. The data as described above with reference to FIG. 10 is then set at the FCP frame of this packet.

This FCP frame is supplied to a home bus/1394 converter 41 (connection means, first conversion means, second conversion means) via the IEEE-1394 long 40. The format of the FCP frame is then converted to the format of the home bus 43 shown in FIG. 2 by the home bus/1394 converter 41 and transmitted to the router 44 via the home bus 43. The router 44 supplies this FCP frame to the lighting 45 via the home bus 46.

The lighting 45 executes the commands set at the OPECODEs and OPERANDs of the FCP frame supplied by the digital TV 31a. In this case, the lighting is put to off. In this way, the digital TV 31a can put the lighting 45 off.

As described above, by connecting a serial bus for transmitting digital data bidirectionally and a home bus using a home bus/1394 converter or a bridge, apparatus connected to a serial bus for carrying out bidirectional transmission of digital data and equipment connected to a home bus can be mutually controlled and data can be exchanged.

Therefore, by connecting apparatus for transmitting digital signals for images and audio that require transmission in real time and those for transmitting control data that do not necessarily require transmission in real time to a serial bus for carrying out bidirectional transmission of digital data, and connecting household electrical appliances that transmit low speed control data to a home bus and then connecting these buses, AV equipment and PCs (personal computers) etc. can communicate at high speeds without being interfered by the communication of household electrical appliances.

Further, by connecting a serial bus for carrying out bidirectional transmission of digital data over comparatively short distances to home buses, control commands can be mutually transmitted between apparatus connected to a serial bus and household electrical appliances that are comparatively distant from the apparatus within a household.

In the above embodiments a description has been given for the case of using HBS and CEBus as the home bus but other kinds of home buses can also be used.

According to the data communication system of the present invention, a connection device connects the first bus for transmitting digital data and commands bidirectionally and a second bus for transmitting commands for controlling electronic apparatus principally for household use, converts a packet format of an asynchronous transmission mode of the first bus to a packet format of the second bus, and converts a packet format of the second bus packet format to the asynchronous transmission mode of the first bus. It is therefore possible to mutually transmit commands between apparatus connected to the serial bus and apparatus connected to the home bus.

Further, according to the data communication device and the data communication method of the present invention, a packet format of an asynchronous transmission mode of the first bus for carrying out bidirectional transmission of digital data and commands is converted to a packet format of the second bus for transmitting commands for controlling electronic apparatus that are principally for household use. Further, the packet format of the second bus is converted to the packet format of the asynchronous transmission mode of the first bus. It is therefore possible to mutually transmit commands between apparatus connected to the serial bus and apparatus connected to the home bus.

## Claims

1. A data communication system comprising:
a first bus for transmitting digital data and commands bidirectionally;
a second bus for transmitting commands for controlling electronic apparatus principally for household use; and
connection means for connecting said first bus and second buses, said connection means converting a packet format of an asynchronous transmission mode of said first bus to a packet format of said second bus, and converting said packet format of said second bus to said packet format of said asynchronous transmission mode of said first bus.

2. The data communication system of claim 1, wherein said first bus is a serial bus and said second bus is a home bus.

3. The data communication system of claim 2, further comprising transmission control means for controlling data transmission between media when said home bus comprises a plurality of said media.

4. The data communication system of claim 3, wherein said connection means carries out conversion of said media between said media, and conversion between physical layers, conversion between data links, conversion between networks, between application layers and conversion between commands of said first and second buses.

5. The data communication system of claim 1, wherein an address of said connection means is designated at a header of a packet for said asynchronous transmission mode of said first bus and a command is transmitted to apparatus connected to said second bus.

6. The data communication system of claim 2, wherein said serial bus is an Institute of Electrical and Electronic Engineers 1394 serial bus and said home bus commands are transmitted using an AV/C-CTS format for an FCP frame of said asynchronous transmission mode of said Institute of Electrical and Electronic Engineers 1394 serial bus.

7. The data communication system of claim 2, wherein said serial bus is an Institute of Electrical and Electronic Engineers 1394 serial bus and said home bus commands are transmitted using CTS code reserved for said home bus for an FCP frame of said asynchronous transmission mode of said Institute of Electrical and Electronic Engineers 1394 serial bus.

8. The data communication system of claim 2, wherein an address of an apparatus connected to said serial bus carrying out bidirectional transmission of digital data is designated after a header part corresponding to a network layer of a frame of said home bus and said serial bus commands are transmitted.

9. A data communication device comprising:
a first bus for carrying out bidirectional transmission of digital data and commands;
a second bus for transmitting commands for controlling electronic apparatus that are principally for household use;
first conversion means for converting a packet format of an asynchronous transmission mode of said first bus to a packet format of said second bus; and
second conversion means for converting said packet format of said second bus to said packet format of said asynchronous transmission mode of said first bus.

10. A data communication method comprising:
converting a packet format of an asynchronous transmission mode of a first bus for carrying out bidirectional transmission of digital data and commands to a packet format of a second bus for transmitting commands for controlling electronic apparatus that are principally for household use; and
converting said packet format of said second bus to said packet format of said asynchronous transmission mode of said first bus.
